# EUROPEAN PATENT SPECIFICATION

(11) **EP 2 156 012 B1**
(45) Date of publication and mention of the grant of the patent: **17.08.2011**
(21) Application number: 08766906.5
(22) Date of filing: 30.05.2008
(51) Int. Cl.: E21B 33/072, E21B 33/08

(54) **SUBSEA INTERVENTION SYSTEM**
UNTERWASSEREINGREIFSYSTEM
SYSTÈME D'INTERVENTION SOUS-MARINE

(30) Priority: 01.06.2007 NO 20072797
(43) Date of publication of application: 24.02.2010
(73) Proprietor: FMC Kongsberg Subsea AS, 3601 Kongsberg (NO)
(72) Inventor: INDERBERG, Olav, N-3615 Kongsberg (NO); JOHANSEN, John, A., N-3610 Kongsberg (NO)
(74) Representative: Onsagers AS
(86) International application number: PCT/NO2008/000191
(87) International publication number: WO 2008/147216

(56) References cited:
- EP-A- 0 959 225
- GB-A- 2 233 365

## Description

### Field of the Invention

The invention relates to a method for controlling grease injection to a subsea intervention system and an apparatus comprising a housing containing a control unit and a pump for grease.

### Background of the Invention

When doing intervention in a hydrocarbon well it is necessary to isolate the well from the environment. Intervention is often carried out using wireline techniques (braided wire, composite cable or slickline). To contain the pressure in the well during operations and avoid hydrocarbons escaping to the environment intervention operations involve the use of a stuffing box which is part of a pressure control head (PCH). The PCH provides a dynamic seal between the cable and the wellbore enclosures to maintain pressure control and prevent wellbore fluids from leaking into the environment. However, because of its braided (wire rope like) exterior, the cable has a bumpy, crevice-filled surface which is difficult for the PCH to seal around as the cable passes through the PCH as it travels into and out of the well. Current practice is to inject grease into the PCH body at a higher pressure than that of the well. In addition grease has to be replenished at some rate to replace grease lost to the surface of the braided cable as it passes through the ends of PCH (going into or out of the well). The grease injection rate is controlled by periodic visual monitoring of the sealing ends of the PCH for leakage and monitoring the grease injection pressure.

This operation gets complicated when performing this practice subsea on a subsea well. This involves the use of a subsea riserless light well intervention (RLWI) stack. For RLWI, the PCH is now remote and difficult to monitor; making it difficult to determine when and how much grease needs to be injected. Furthermore, as the stack is run in deeper water, the length of the grease supply line feeding the PCH grows longer, making it increasingly difficult to pump viscous grease down to the PCH at a reasonable surface pressure or pump rate. The long grease lines and viscous grease becomes more problematic as deeper colder environments are encountered.

Current practice for subsea grease injection requires the surface deployment of grease lines as shown in US Patent 4821799. This patent discloses the use of an accumulator to enable a better control of injection pressures.

There is also a more subtle problem associated with grease injection to a subsea PCH, that of water ingress. Normally the PCH is lowered to the lubricator tube together with the tool. However, in some operations, the PCH is run independently after the wireline tools, cable, etc. are landed in the RLWI stack's lubricator tube. As the PCH assembly is lowered down to the sea floor, the braided cable passes through the PCH. If grease is not supplied at a sufficient pressure and rate to offset the increase in ambient pressure and loss of grease to the cable passing by, seawater could weep past the seal ends of the PCH into the main cavity. If this occurs, there is an increased risk that the water will help to form a hydrate plug inside the PCH. (later exposed to wellbore pressure and fluids) and prevent the cable from freely moving through the PCH.

There is in GB 2 233365 which is considered the closest prior art described a subsea wireline grease control system, which operates the grease injection pressure by means of a system pump-accumulator placed at the surface in a working ship.

### Summary and Objects of the invention

The invention regards a method and a device for controlling grease injection to a subsea intervention system, where there is provided a at site pressure compensated system for providing the grease at a pressure higher than the outside pressure, this being either the well pressure or the pressure of the water around the subsea system or both these pressures.

The invention is according to one aspect suitable in an intervention workover control system (IWOCS) that is all electric or electro-hydraulic that may comprise a processor with the capability to handle information, for example to record outside ambient sea water pressure, pressure inside the PCH and below the PCH (inside the well). As mentioned above, the purpose of the grease and PCH is to create a dynamic seal that generates a slightly higher (grease) pressure inside the PCH than that of the environment above or the well below. To do that requires pumping grease at some empirical rate monitored visually. In subsea situations, the pumping pressure is exacerbated by the length of the grease line going down to the subsea PCH and the rate is a pure guess, often resulting in sending too much down to conservatively compensate for the unknown condition.

The elimination of the grease line is also in keeping with FMC's deepwater RLWI operating philosophy for line management in deepwater (3 line limit). Reduction or elimination of lines from the surface to the subsea RLWI stack greatly simplifies deepwater operations beyond 500 m (1500 ft) water depths. In addition, the invention makes the overall system depth insensitive by eliminating the grease line which has a "finite" length which would otherwise define the system's operating depth,

The benefit of the present invention is that its architecture is depth insensitive, eliminating the pressure flow rate problems associated with pumping viscous grease longer distances (at higher surface pump pressures) and eliminates waste by using environmentally friendly lubricants that are injected at much lower differential pressures because the injection process is monitored. It also eliminates a line going into the water which is beneficial for better line management; critical for deepwater (> 500m ~ 1500 ft.) operations.

According to the invention there is provided a method for controlling grease injection to a subsea intervention system comprising a pressure compensated grease accumulator. The method comprises the elements that pressure in the well and in the fluid surrounding said subsea intervention system is read by the accumulator, which as a consequence of this delivers a grease injection pressure at a level that is above said pressures, and where the subsea intervention system comprising a housing containing a control unit comprising an electric motor, a pump, and a grease supply accumulator, where the method comprises the steps of providing a connection with an outside pressure sensor, receiving signals from said pressure sensor and controlling the pump to regulate the grease injection pressure at a level that is above said outside pressure.

According to one aspect the outside pressure sensor may record the ambient, i.e. seawater pressure. According to another aspect the outside pressure sensor may record the wellhead pressure.

In one aspect of the invention the unit in a first mode may be connected to an intervention control system to receive instructions from a control station at the surface and in a second mode may be operating autonomously when being disconnected from an IWOCS. Wherein there in one embodiment the autonomous mode power may be provided by a battery in the housing.

According to another aspect the signals from the pressure sensor may be processed by the intervention control system. According to another aspect the signals from the pressure sensor may be processed by a processor in the module. The grease may be removed from the subsea equipment and returned to the grease supply accumulator according to another aspect of the invnetion.

The invention also relates to a grease injection device for injecting grease into a subsea intervention system, comprising a housing with an accumulator of grease, a grease injection line towards the system. According to the invention the grease injection device is a self-contained unit attachable to the system and is pressure compensated to deliver a pressure higher than a pressure within the well and or outside the subsea intervention system, and comprises a pump with an electric motor operating the pump, connected to the grease injection line, at least one pressure sensor reading the pressure within the well and or the outside and a control unit operating the different elements to pressure compensate the device.

According to one aspect the device may be pressure compensated by having a passively pressure compensated accumulator. In another aspect the device may comprises a ROV contingency refill in connection with the accumulator. In a further aspect the device may comprise a grease wipe device connected to the subsea system, and a return line for returning the wiped grease back to the device. In another aspect it may comprises a second pump with a second electric motor.

In a further aspect it may comprise two separate injection points towards the subsea system. According to another aspect the device may be connected to the PCH. The housing may be a self-contained unit attached to a pressure control head in another aspect

The control unit may comprise a processor and data storage unit. The device may comprise a source of electric power, according to another aspect. The power source may be a battery or be an umbilical. In another aspect the device may comprise a workover control module.

### Brief description of the Drawings

The invention will now be described with reference to the accompanying drawing where
Fig. 1 shows a sketch of an intervention system on a subsea well
Fig. 2 is a diagram showing the grease injection module in IWOCS mode, and
Fig. 3 is a diagram showing the grease injection module in autonomous mode.

### Description of the preferred Embodiments

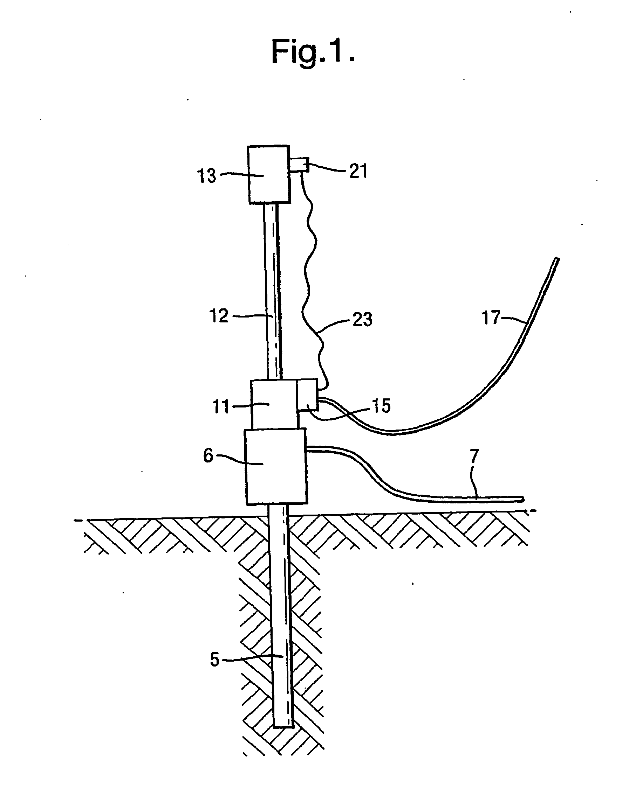

Fig. 1 is a schematic drawing showing a subsea lubricator system 10 according to the invention attached to a subsea well 5. The subsea well 5 extends into a subterranean formation and has a Christmas tree 6 attached to the wellhead and a flowline/umbilical 7 extending to a process facility. The subsea lubricator stack 10 includes a pressure control unit (BOP) 11, a lubricator (pipe) 12 and the pressure control head (PCH) 13.

The lubricator system further comprises the control system (IWOCS) 15 with a separate workover umbilical 17 extending to the surface. The IWOCS controls the system. In prior art operations grease is pumped down the line 17 and further through line 23 to the PCH 13 to maintain a seal between the braided wire or cable and the seawater environment.

In a first embodiment of the invention shown on Fig. 1 a grease injection module 21 is attached to the PCH 13. in this mode line 23 is an electric cable that connects the grease injection module 21 with the IWOCS 15. With the grease injection module attached to the PCH it can be raised and lowered together with the PCH and be able to operate in an autonomous mode. In another embodiment (not shown) the grease injection module is made as a part of the IWOCS. In this case the line 23 will comprise both electric and fluid lines and grease is supplied to the PCH through this line.

The invention proposes the elimination of the grease line to, or from, surface, replaced with a depth compensated bladder or accumulator filled with grease. The grease injection module 21 comprises an accumulator 31 for grease operatively connected via line 33 to a pump 35. The outlet grease line 37 from the pump is connected to the PCH 13. The pump is controlled by an electric motor 36. A first power supply cable 32 connects the IWOCS with the electric motor 36 for the pump 35. The grease line 37 has a one way valve 43, a shut-off valve 44 and a pressure and temperature sensor 45.

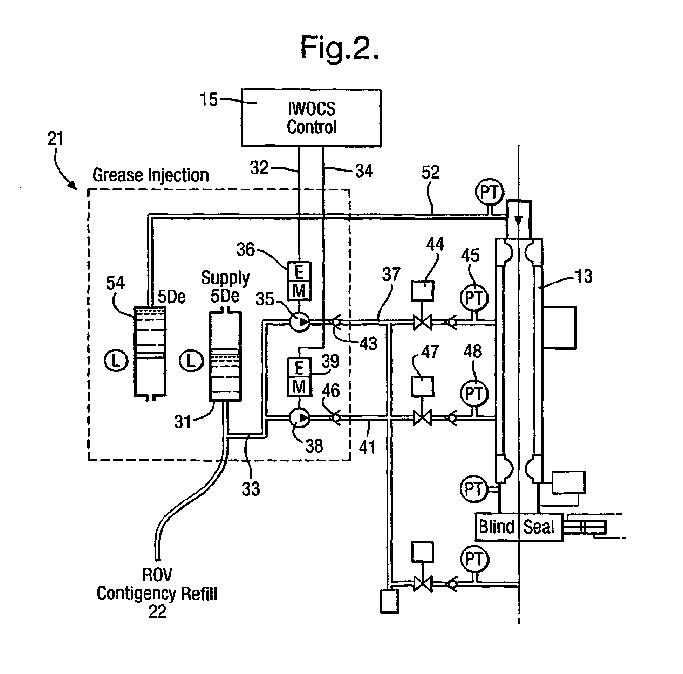

In the embodiment shown in Fig. 2 there is also provided a second pump 38 with associated motor 39, having a separate power supply cable 34. A second grease line 41 connects the pump with the PCH. As above, the second grease line 41 includes a one way valve 46, a shut-off valve 47 and a pressure and temperature transmitter 48. The second pump may be added to provide for redundancy in the system, in case of failure of the first pump 35. It will also make it possible for higher grease pumping rates in case of emergency, with both pumps operating together. They may also be used for the rare times when the cable is travelling very quickly through the PCH and may require more grease than one electric motor/pump can supply.

As an alternative, grease may be wiped from the cable as it passes out of the PCH and returned to a container in the module. This is shown on Fig. 2 by return grease line 52 that leads to canister 54. In this way no grease will be released to the environment. However, with the present invention the supply of grease can be tightly controlled to minimize the amount used and therefore there will be very small amounts released to sea.

In addition, a ROV attachment 22 may be added to periodically replenish the grease in the bladder for long duration jobs.

In operation the IWOCS closely monitors the pressure outside, in the PCH and in the well and compensates by periodically turning on the first 35 or both, 35 and 38, grease pumps to pump grease into the PCH. The grease pressure is closely monitored and the pump(s) are regulated to generate a very small pressure differential between the PCH and the well.

The close in-situ monitoring of pressure minimizes the amount of grease needed because the differential pressure can be kept to a minimum, hence the practicality of subsea bladder instead of guessing on a larger volume needed and trying to pump it down a grease line. Keeping the differential pressure to a minimum also lessens the amount of grease working itself past the PCH seal elements into the well and/or the environment. From the two pumps 35 and 38, the grease may be injected into the PCH in two locations (again opening one or two lines to compensate for cable speed - rapid loss of grease). There is also a third grease injection line 51 in a location below the PCH for better control of the differential pressure between the PCH and well, if necessary.

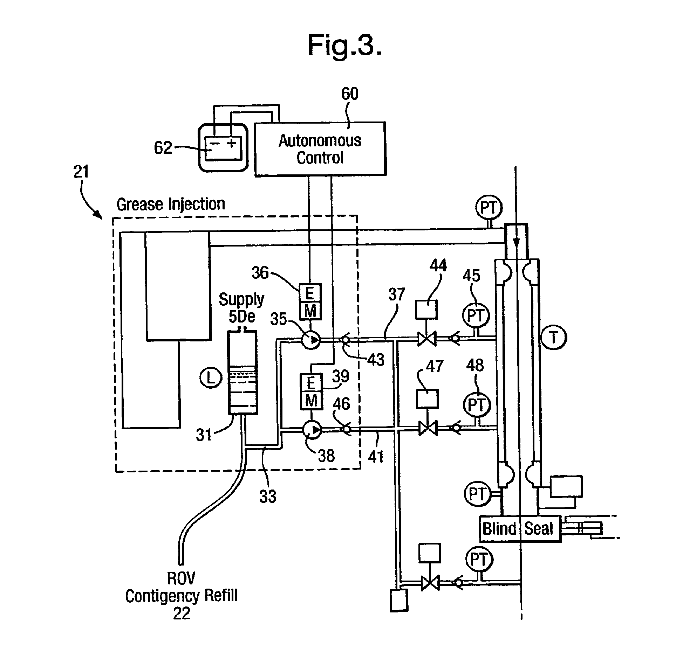

In a second embodiment of the invention shown in Fig. 3 the grease injection module is equipped with its own separate control unit 60 configured as an autonomous version of the control system. The autonomous control unit comprises a processor and data storage (not shown) and is preferably powered by a battery 62. Thus the electric control can be separated from the main IWOCS, but retaining the monitoring and injection control features for grease injection into the PCH. This embodiment simplifies the packaging of the PCH assembly by eliminating the need for the subsea electrical connection 23 (Fig. 1) after the PCH is lowered separately and latched to the rest of the intervention (RLWI) stack. However, this autonomous feature adds two new capabilities. First, as the PCH assembly is lowered to the sea floor, it independently monitors the increase in ambient sea water pressure and can adjust by injecting grease into the PCH at just a slightly higher than ambient pressure differential, to keep sea water from entering the PCH cavity, thereby avoiding the hydrate plugging issues. The control is battery powered to maintain its autonomy. Second, in the event that the surface vessel needs to depart and/or the cable is cut somewhere outside of the PCH and the control system is disconnected, the grease injection pressure containment feature of the PCH is maintained even though the rest of the IWOCS is shut-down, for as long as battery power is present.

Another issue is the grease itself. Current practice is to use some form of viscous petroleum based grease that has a certain amount of stickiness to adhere to the surface of the PCH seals and the rough exterior of the cable, creating a pseudo smooth surface on the braided cable. However, this creates its own "leakage to the environment" as the grease laden cable emerges out the top of the PCH during wireline retrieval. In addition, the ambient sea water environment may be as low as 4 deg. C (39 deg. F), which may lead to a increase in the greases viscosity or lead to a hardening condition. To alleviate this condition, the invention proposes to replace petroleum grease with a fish-oil based lubricant, significantly lowering viscosity and eliminating hydrocarbon discharge to the environment.

The invention has now been explained with non-limiting embodiments, and a skilled person will understand that there may be made several alterations and modifications to the embodiments that are within the scope of the invention as defined in the following claims.

## Claims

1. Method for controlling grease injection to a subsea lubricator the said lubricator comprising a housing containing a grease supply accumulator (31) a pump (35), an electric motor (36) for operating the and a control unit (15,) for controlling the motor, where the said method comprises the steps of reading an outside pressure from a sensor located outside said housing, receiving signals from said pressure sensor in the control unit (15) and controlling the motor (36) and the pump (35) to deliver grease from the grease accumulator (31) to the lubricator at a level that is above said outside pressure.

2. Method according to claim 1, **wherein** the outside pressure sensor records the ambient, i.e. seawater pressure.

3. Method according to claim 1, **wherein** the outside pressure sensor records the wellhead pressure.

4. Method according to claim 1, **wherein** the unit in a first mode is connected to an intervention control system to receive instructions from a control station at the surface and in a second mode is operating autonomously when being disconnected from an IWOCS (15).

5. Method according to claim 4, **wherein** in autonomous mode power is provided by a battery (62) in the housing.

6. Method according to claim 1, **wherein** the signals from the pressure sensor is processed by the intervention control system.

7. Method according to claim 1, **wherein** the signals from the pressure sensor is processed by a processor in the unit.

8. Method according to one of the preceding claims, **wherein** grease is removed from the subsea equipment and returned to the grease supply accumulator.

9. Grease injection device for injecting grease into a subsea intervention system, comprising a housing with an accumulator of grease (31), a grease injection line (37,41) towards the system, **wherein** the grease injection device is a self contained unit attachable to the system and is pressure compensated to deliver a pressure higher than a pressure within the well and or outside the subsea intervention system, and comprises a pump (35) with an electric motor (36) operating the pump (35), which is connected to the grease injection line (37,41), at least one pressure sensor reading the pressure within the well and or the outside and a control unit (15,65) operating the different elements to pressure compensate the device.

10. Device according to claim 9, **wherein** it is pressure compensated by having a passively pressure compensated accumulator (31).

11. Device according to claim 9, **wherein** it comprises a ROV contingency refill (22) in connection with the accumulator (31).

12. Device according to claim 9, **wherein** it comprises a grease wipe device connected to the subsea system, and a return line (52) for returning the wiped grease back to the device.

13. Device according to claim 9, **wherein** it comprises a second pump (38) with a second electric motor (39).

14. Device according to claim 9, **where** i n it comprises at least two separate injection points towards the subsea system.

15. Device according to claim 9, **wherein** it is connected to the PCH (13).

16. Device according to claim 9, **wherein** the housing is a self-contained unit attached to a pressure control head (13).

17. Device according to claim 9, **wherein** the control unit comprises a processor and data storage unit.

18. Device according to claim 9, **wherein** it comprising a source of electric power.

19. Device according to claim 18, **wherein** the power source is a battery (62).

20. Device according to claim 18, **wherein** the power source is an umbilical (17).

21. Device according to claim 9, **wherein** it comprising a workover control module.

22. Device according to claim 9, wherein the lubricant in the device is a fish-oil based grease.

## Patentansprüche

1. Verfahren zum Steuern des Einspritzens von Schmiermittel in eine Unterwasser-Schmiereinrichtung, wobei die Schmiereinrichtung folgendes aufweist:
ein Gehäuse, das einen Schmiermittelvorratsspeicher (31) enthält, eine Pumpe (35), einen Elektromotor (36) zum Betreiben der Pumpe und eine Steuereinheit (15) zum Steuern des Motors,
wobei das Verfahren folgende Schritte aufweist:
- Lesen eines Außendrucks von einem außerhalb von dem Gehäuse vorgesehenen Sensor,
- Empfangen von Signalen von dem Drucksensor in der Steuereinheit (15) und
- Steuern des Motors (36) und der Pumpe (35) zum Abgeben von Schmiermittel von dem Schmiermittelspeicher (31) an die Schmiereinrichtung mit einem Pegel, der über dem Außendruck liegt.

2. Verfahren nach Anspruch 1,
wobei der Außendrucksensor den Umgebungsdruck, d.h. den Meerwasserdruck, aufzeichnet.

3. Verfahren nach Anspruch 1,
wobei der Außendrucksensor den Druck am Bohrlochkopf aufzeichnet.

4. Verfahren nach Anspruch 1,
wobei die Einheit in einem ersten Modus mit einem Eingriffs-Steuersystem verbunden ist, um Anweisungen von einer Steuerstation an der Oberfläche zu empfangen, und in einem zweiten Modus autonom arbeitet, wenn sie von einem IWOCS (15) getrennt wird.

5. Verfahren nach Anspruch 4,
wobei im autonomen Modus Energie von einer Batterie (62) in dem Gehäuse bereitgestellt wird.

6. Verfahren nach Anspruch 1,
wobei die Signale von dem Drucksensor von dem Eingriffs-Steuersystem verarbeitet werden.

7. Verfahren nach Anspruch 1,
wobei die Signale von dem Drucksensor von einem Prozessor in der Einheit verarbeitet werden.

8. Verfahren nach einem der vorhergehenden Ansprüche,
wobei Schmiermittel von den Unterwassergerätschaften entfernt und zu dem Schmiermittelvorratsspeicher zurückgeführt wird.

9. Schmiermittel-Einspritzvorrichtung zum Einspritzen von Schmiermittel in ein Unterwasser-Eingriffssystem, wobei die Einspritzvorrichtung ein Gehäuse mit einem Schmiermittelspeicher (31) und eine zu dem System führende Schmiermittel-Einspritzleitung (37, 41) aufweist, wobei es sich bei der Schmiermittel-Einspritzvorrichtung um eine autonome Einheit handelt, die sich an dem System anbringen läßt und druckkompensiert ist, um einen höheren Druck als einen Druck innerhalb des Bohrlochs oder außerhalb des Unterwasser-Eingriffssystems abzugeben, und wobei die Einspritzvorrichtung ferner folgendes aufweist: eine Pumpe (35) mit einem Elektromotor (36), der die Pumpe (35) betreibt, die mit der Schmiermittel-Einspritzleitung (37, 41) verbunden ist, mindestens einen Drucksensor, der den Druck im Inneren des Bohrlochs und/oder außerhalb liest, sowie eine Steuereinheit (15, 65), die die verschiedenen Elemente für die Druckkompensation der Vorrichtung betreibt.

10. Vorrichtung nach Anspruch 9,
wobei die Druckkompensation **dadurch** erfolgt, daß ein passiv druckkompensierter Speicher (31) vorhanden ist.

11. Vorrichtung nach Anspruch 9,
wobei sie eine ROV-Kontingenz-Nachfüllung (22) in Verbindung mit dem Speicher (31) aufweist.

12. Vorrichtung nach Anspruch 9,
wobei sie eine mit dem Unterwassersystem verbundene Schmiermittel-Abstreifeinrichtung und eine Rückführleitung (52) zum Zurückführen des abgestreiften Schmiermittels zurück zu der Vorrichtung aufweist.

13. Vorrichtung nach Anspruch 9,
wobei sie eine zweite Pumpe mit einem zweiten Elektromotor (39) aufweist.

14. Vorrichtung nach Anspruch 9,
wobei sie mindestens zwei separate Einspritzstellen in Richtung auf das Unterwassersystem aufweist.

15. Vorrichtung nach Anspruch 9,
wobei sie mit der PCH (13) verbunden ist.

16. Vorrichtung nach Anspruch 9,
wobei es sich bei dem Gehäuse um eine autonome Einheit handelt, die an einem Drucksteuerkopf (13) angebracht ist.

17. Vorrichtung nach Anspruch 9,
wobei die Steuereinheit einen Prozessor und eine Datenspeichereinheit aufweist.

18. Vorrichtung nach Anspruch 9,
wobei sie eine elektrische Stromquelle aufweist.

19. Vorrichtung nach Anspruch 18,
wobei die Stromquelle eine Batterie (62) ist.

20. Vorrichtung nach Anspruch 18,
wobei die Stromquelle eine Versorgungsleitung (17) ist.

21. Vorrichtung nach Anspruch 9,
wobei sie ein Überarbeitungs-Steuermodul aufweist.

22. Vorrichtung nach Anspruch 9,
wobei es sich bei dem Schmiermittel in der Vorrichtung um ein Schmiermittel auf Fischöl-Basis handelt.

## Revendications

1. Procédé pour commander l'injection de graisse dans un lubrificateur sous-marin, ledit lubrificateur comprenant un boîtier contenant un accumulateur (31) d'alimentation en graisse, une pompe (35), un moteur électrique (36) pour actionner la pompe, et une unité de commande (15) pour commander le moteur, où ledit procédé comprend les étapes de lecture d'une pression extérieure depuis un détecteur situé hors dudit boîtier, de réception de signaux provenant dudit détecteur de pression dans l'unité de contrôle (16) contrôlant et le moteur (36) et la pompe (35) pour délivrer de la graisse depuis l'accumulateur de graisse (31) vers le lubrificateur à un niveau qui est supérieur à ladite pression extérieure.

2. Procédé selon la revendication 1, dans lequel le détecteur de pression extérieur enregistre la pression ambiante, c'est-à-dire la pression de l'eau de mer.

3. Procédé selon la revendication 1, dans lequel le détecteur de pression extérieur enregistre la pression de la tête de puit.

4. Procédé selon la revendication 1, dans lequel l'unité, dans un premier mode, est connectée à un système de contrôle d'intervention pour recevoir des instructions depuis une station de contrôle à la surface et, dans un deuxième mode, fonctionne de manière autonome lorsqu'elle est déconnectée depuis un IWOCS (15).

5. Procédé selon la revendication 4, dans lequel l'énergie, dans le mode autonome, est fournie par une batterie (62) dans le boîtier.

6. Procédé selon la revendication 1, dans lequel les signaux du détecteur de pression sont traités par le système de contrôle d'intervention.

7. Procédé selon la revendication 1, dans lequel les signaux du détecteur de pression sont traités par un processeur dans l'unité.

8. Procédé selon l'une quelconque des revendications précédentes, dans lequel la graisse est retirée de l'équipement sous-marin et retournée vers l'accumulateur d'alimentation en graisse.

9. Dispositif formant injecteur de graisse pour injecter de la graisse dans un système d'intervention sous-marin, comprenant un boîtier avec un accumulateur de graisse (31), une ligne d'injection de graisse (37, 41) vers le système, dans lequel l'injecteur de graisse est une unité autonome pouvant être attachée au système et est compensé en pression pour délivrer une pression supérieure à une pression dans le puits et ou en dehors du système d'intervention sous-marin, et comprend une pompe (35) avec un moteur électrique (36) actionnant la pompe(35), connectée à la ligne d'injection de graisse (37, 41), au moins un détecteur de pression lisant la pression dans le puits et ou en dehors, et une unité de commande (15, 65) commandant les différents éléments pour compenser en pression l'injecteur de graisse.

10. Dispositif selon la revendication 9, dans lequel la pression est compensée en ayant un accumulateur (31) compensé en pression de manière passive.

11. Dispositif selon la revendication 9, comprenant une recharge (22) de secours ROV en lien avec l'accumulateur (31).

12. Dispositif selon la revendication 9, comprenant un dispositif de balayage de graisse connecté au système sous-marin et une ligne de retour (52) pour retourner la graisse balayée à l'injecteur de graisse.

13. Dispositif selon la revendication 9, comprenant une deuxième pompe (38) avec un deuxième moteur électrique (39).

14. Dispositif selon la revendication 9, comprenant au moins deux points d'injection distincts vers le système sous-marin.

15. Dispositif selon la revendication 9, lequel est connecté au PCH (13).

16. Dispositif selon la revendication 9, dans lequel le boîtier est une unité autonome attachée à une tête de contrôle de pression (13).

17. Dispositif selon la revendication 9, dans lequel l'unité de contrôle comprend un processeur et une unité de stockage de données.

18. Dispositif selon la revendication 9, comprenant une source d'énergie électrique.

19. Dispositif selon la revendication 18, dans lequel la source d'énergie est une batterie (62).

20. Dispositif selon la revendication 18, dans lequel la source d'énergie est un cordon de liaison (17).

21. Dispositif selon la revendication 9, comprenant un module de contrôle de reconditionnement.

22. Dispositif selon la revendication 9, dans lequel le lubrifiant dans le dispositif est une graisse à base d'huile de poisson.
